(19) Europäisches Patentamt

European Patent Office

Office européen des brevets

(11) **EP 3 468 163 B1**

(12) **EUROPEAN PATENT SPECIFICATION**

(45) Date of publication and mention
of the grant of the patent:
**05.04.2023 Bulletin 2023/14**

(21) Application number: **16903604.3**

(22) Date of filing: **23.06.2016**

(51) International Patent Classification (IPC):
*H04N 1/028* (2006.01)   *H04N 1/04* (2006.01)
*H04N 1/10* (2006.01)   *H04N 1/12* (2006.01)

(52) Cooperative Patent Classification (CPC):
**H04N 1/00827; H04N 1/00328; H04N 1/00801;
H04N 1/028; H04N 1/0282; H04N 1/04; H04N 1/10;
H04N 1/12**

(86) International application number:
**PCT/CN2016/086860**

(87) International publication number:
**WO 2017/206222 (07.12.2017 Gazette 2017/49)**

(54) **INTELLIGENT INTERNET HIGH-DEFINITION SCANNER WITH LASER CORRECTION**

HOCHAUFLÖSENDER SCANNER MIT LASERKORREKTUR FÜR INTELLIGENTES INTERNET

DISPOSITIF DE BALAYAGE À HAUTE DÉFINITION INTERNET INTELLIGENT À CORRECTION LASER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.05.2016 CN 201610377419**

(43) Date of publication of application:
**10.04.2019 Bulletin 2019/15**

(73) Proprietor: **Dalian Czur Tech Co., Ltd.
Dalian, Liaoning 116023 (CN)**

(72) Inventor: **ZHOU, Kang
Dalian
Liaoning 116023 (CN)**

(74) Representative: **Proi World Intellectual Property
GmbH
Obermattweg 12
6052 Hergiswil, Kanton Nidwalden (CH)**

(56) References cited:
CN-A- 102 170 514    CN-A- 102 447 810
CN-A- 103 595 891    CN-A- 104 954 625
US-A- 5 760 925    US-A- 5 760 925
US-A1- 2004 245 485    US-B1- 8 072 650

• ZHENG ZHANG ET AL: "Restoration of curved
document images through 3D shape modeling",
PROCEEDINGS OF THE 2004 IEEE COMPUTER
SOCIETY CONFERENCE ON COMPUTER VISION
AND PATTERN RECOGNITION 27 JUNE-2 JULY
2004 WASHINGTON, DC, USA, IEEE,
PROCEEDINGS OF THE 2004 IEEE COMPUTER
SOCIETY CONFERENCE ON COMPUTER VISION
AND PATTERN RECOGNITION IEE, vol. 1, 27 June
2004 (2004-06-27), pages 10-15, XP010708982,
DOI: 10.1109/CVPR.2004.1315007 ISBN:
978-0-7695-2158-9

## Description

## Technical Field

The present invention relates to an intelligent Internet high-definition scanner with laser correction. The present invention relates to IPC (International Patent Classification) H04 electric communication technique; H04N pictorial communication, e.g. television; H04N1/00 scanning, transmission or reproduction of document or the like, e.g. facsimile transmission, details thereof; H04N1/04 scanning arrangements; H04N1/10 using flat picture-bearing surfaces.

## Background Art

With the development of video collection and processing technology, the scanner has been upgraded from traditional light-sensitive scanner to a new generation of image collection scanner based primarily on video image collection. This new type of scanner collects a photo of a page through a camera located above the scanned object to complete scan, which eliminates the heavy workload caused by the traditional scanning method of manually pressing a presswork to be scanned on a scanning surface, so as to have the great advantage of fast scanning speed. However, when such picture collection scanner scans a scanned object having a certain thickness, such as a dictionary or a textbook with a large thickness, a scanning image scanned in the page in the middle of the book may have a large degree of bending, which seriously affects the reading quality, and the bending can have a serious impact on subsequent OCR text recognition.

Various scanning technologies are known. For example, US 5,760,925 A discloses an overhead scanning system that records pages from bound documents. The scanning system is defined with a general imaging geometry that makes the scanning system readily portable, and provides the scanning system with a variable imaging area. Once an operator defines an imaging area of an image acquisition system, the operator positions a light stripe projector to project across the imaging area. After recording calibration data, a perspective transform is provided by a perspective transform generator. In operation, a first image of the bound document having a light stripe projected there across is recorded by the image acquisition system. A page shape transform generator is then used to derive a page shape transform. Subsequently, a second image of the bound document is recorded without projecting a light stripe thereacross. If the second image is warped because of foreshortening, or magnification due to the pages of the bound document being curved, an image correction system de-warps the second image using the perspective and page shape transforms. The de-warped image is reconstructed by "polling" each location in the second image to determine the value of each pixel in the de-warped image.

In Zheng Zhang et al., "Restoration of curved document images through 3D shape modeling", Proceedings of the 2004 IEEE Computer Society Conference of Computer Vision and Pattern Recognition IEE, vol. 1, 27 June 2004, pages 10-15, a scanner is disclosed having a light source, a mirror, a lens and a linear CCD sensor, all of which are located underneath a scanning plane. A book surface to be scanned is positioned face down on the scanning plane. For this scanner, a model is disclosed to reconstruct the 3D shape of the book surface. The scanned image is restored using the shape based on two models (de-shading and dewarping).

US 8,072,650 B1 discloses a document-imaging device that captures images of pages of document objects and has automatic focus capability. The device includes a light pattern source, an optical sensor and an automatic focus mechanism. The light pattern source projects a predetermined light pattern onto a page of the document object being imaged. Due to the thickness of the document object, different pages of the document object are separated by different thicknesses from an end page of the document object. The light pattern varies as a function of the separation of the page being imaged from the end page. The optical sensor senses the light pattern projected onto the page being imaged. The automatic focus mechanism focuses an image capture device on the page being imaged, based on the sensed light pattern.

US 2004/245485 A1 discloses a laser camera system for capturing wrinkle images of a fabric. The laser camera system includes a one-line laser projector, and a camera is set up over a plane board, which is motorized to move back and forth. As a fabric or replica is placed on the board and moves along the direction controlled by the motor, the laser line scans the replica and the laser camera collects the information of laser intensity and wrinkle depths at the same time.

## Summary of the Invention

The invention is set out in the appended set of claims.

## Brief Description of the Drawings

In order to more clearly illustrate the technical solutions in the embodiments of the present invention or the prior art, the drawings to be used in the embodiments or the description of the prior art will be briefly introduced below. Obviously, the drawings in the following description merely indicate some embodiments of the present invention, and those skilled in the art can further obtain other drawings according to these drawings without going through any creative work.

Fig. 1 is a calibration schematic diagram of the present invention

Fig. 2 is a schematic diagram of 3D curves constructed by the present invention;

Fig. 3 is a schematic diagram of a 3D curved surface constructed by the present invention;

Fig. 4 is a schematic diagram illustrating the calculation of a projection coefficient of the present invention;

Fig. 5 is a schematic diagram of the 3D curved surface with contents after pixel conversion;

Fig. 6 is a system module diagram of the present invention;

Fig. 7 is a side view of an entity structure according to embodiment 1 of the present invention;

Fig. 8 is a bottom view of the entity structure according to embodiment 1 of the present invention;

Fig. 9 is a top view of the entity structure according to embodiment 1 of the present invention;

Fig. 10 is a front view of the entity structure according to embodiment 2 of the present invention; and

Fig. 11 is a top view of the entity structure according to embodiment 2 of the present invention.

## Detailed Description of the Preferred Embodiments

In order to make the objects, the technical solutions and the advantages of the embodiments of the present invention clearer, the technical solutions in the embodiments of the present invention are clearly and completely described with reference to the drawings in the embodiments of the present invention.

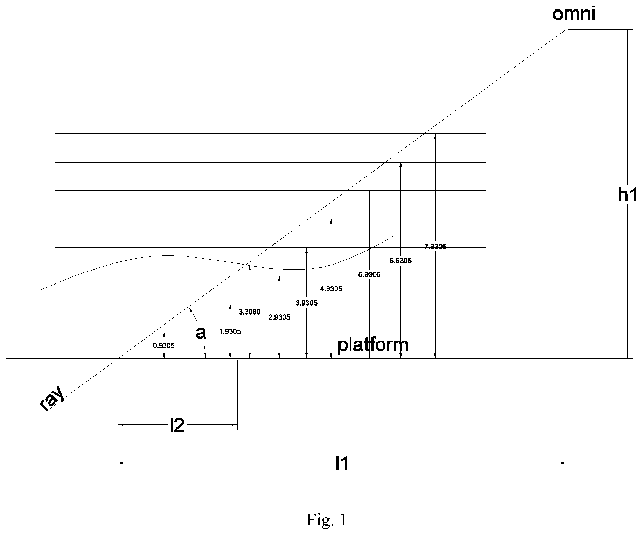

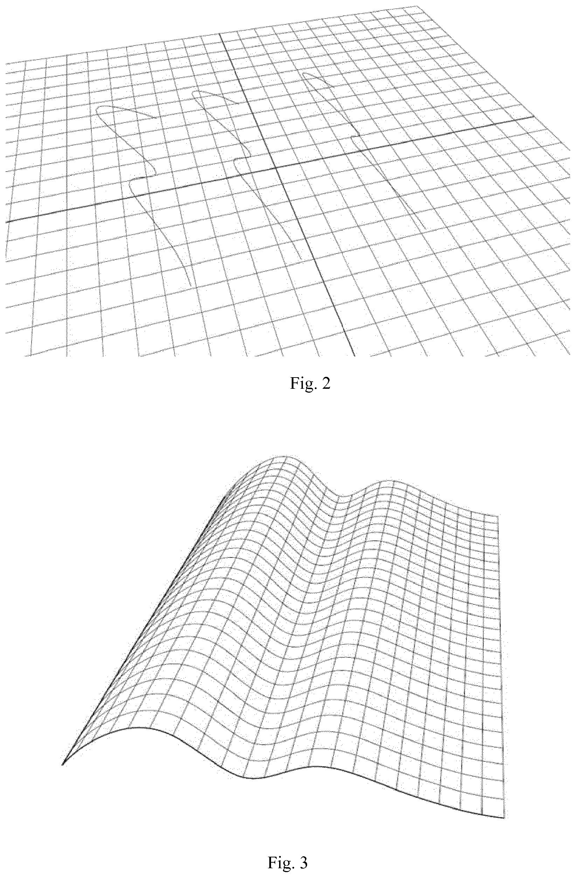

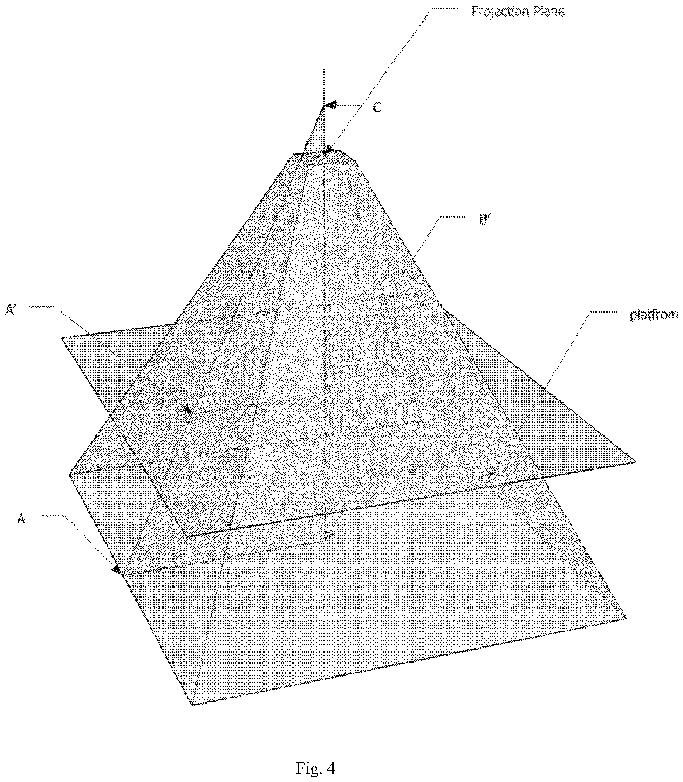

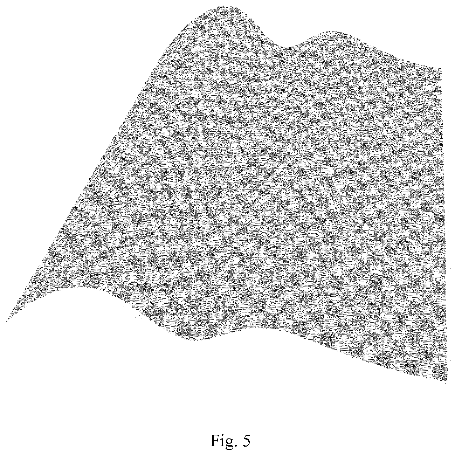

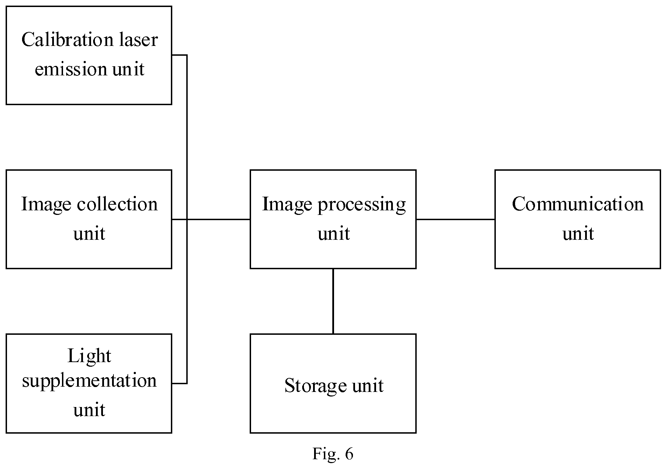

As shown in Fig. 1 to Fig. 6, an intelligent Internet high-definition scanner with laser correction mainly comprises a set scanning area and a scanner with an image collection camera.

A plane of a certain size bearing the scanner can be directly used as the scanning area, such as a desk surface or a work surface where the scanner is placed. A special support plate unfolded by a certain angle can also be used to better guarantee that, after a certain thickness of the pages of the book are opened, the pages are still kept in an opened state under the deadweight thereof, which can save an external force for pressing a thicker book.

Preferably, a planar scanning area is defined as a rectangular area with a fixed size.

The core optical components of the scanner mainly comprise a calibration laser emission unit and an image collection unit, that is a camera that can collect pictures and/or continuous frame sequence images to form a video in general, and an imaging focus of the camera is located right above a geometric center of the rectangular scanning area. Preferably, as shown in the drawings, the camera is fixed through an L-shaped support, and the calibration laser emission unit is arranged at the bending part of the L-shaped support.

In order to facilitate subsequent calculation, as a preferred embodiment, a focus of the camera is set to be located right above the plane of the scanning area; and an acute angle is formed between a plurality of laser beams emitted by the calibration laser emission unit and the plane of the scanning area, which is an angle *a* as shown in Fig. 1.

A component capable of emitting planar fan-shaped laser beams is selected as the laser emission unit to ensure that the laser beam projected on the plane of the scanning area finally forms straight laser line. Preferably, the embodiments of the present invention comprise three laser emitters capable of emitting three laser beams to the plane of the scanning area to form three mutually parallel laser lines that are also parallel to a bottom surface of a rectangular area set by the algorithm, and in order to be able to adapt to the form of general book, the laser lines are parallel to a long side of the rectangular area.

Meanwhile, an angle of the rectangular area is selected as an original point to establish a three-dimensional coordinate system, the long side of the rectangular area is x axis, a short side of the rectangular area is y axis, a vertical height is z axis, and meanwhile, a imaginary rectangular pyramid is formed by connecting the focus of the camera to four angles of the rectangular area.

Although a plurality of laser beams obviously conduce to improving the accuracy of operation, one laser beam or one laser line can also satisfy the requirement of subsequent algorithm, particularly the requirement of constructing 3D curved surfaces.

When a L-shaped support with a fixed height is used, the preset steps above can be stored in the storage unit in the system; when the L-shaped support with adjustable height is used, or the adjustable support plate above is used, the steps above can be obtained by the system through self-calibration after the computer is turned on, and some of the parameters, such as the definition of the scanning area, can also be manually set.

Turn the book to a specified number of pages, and place it flat in the rectangular scanning area, since the subsequent algorithm is the calculation based on the pixel points in the image, an edge of the book does not need to be parallel to the side of the rectangular area in the operation of this step.

In order to prevent the ambient light brightness from affecting the imaging quality and brightness, and avoid the L-shaped support from generating a shadow on the page, thereby affecting the algorithm identification, as a preferred embodiment, a light supplementation unit capable of covering the entire plane of the scanning area is further arranged around the camera, which is turned on during scanning to remove possible light influence factors.

In the scanning process, the laser beam forms a curve on the surface of the page of opened book, the planar image with the curve is collected, the image processing unit analyzes the y coordinate of each pixel point on the laser line in the planar image, obtains a distance difference value d between a positive projection point, which is an intersection point of each pixel point on the laser line with the curved surface of the page on a scanning platform, and an intersection line of the laser beam with the scanning platform through calculation, wherein $d=l1-y$, and $l1$ is a distance from the intersection line of the laser beam with the scanning platform to the positive projection of a beginning point of the laser beam on the scanning platform; and puts the difference value d and the intersection angle of the laser beam and the scanning platform into equation (1);

$$f(a, d) = tan(a) * d \quad (1)$$

through calculation to obtain an actual space height $f(a, d)$ of each pixel point on the laser line in the planar image, which is a z coordinate of the pixel point.

The image processing unit is configured to, according to a height coordinate z of each point on the 3D curve, construct an imaginary plane for the point, the imaginary plane being parallel to a bottom surface of a rectangular pyramid, wherein the bottom surface is parallel to a plane containing the scanning area; calculate, with respect to each point on the 3D curve, an angle formed by intersection of the imaginary plane corresponding to the point and a line connecting said point and a focus of the camera;

based on the intersection angle, calculate a distance d between the point and a geometric center of the imaginary plane of the point according to the following equation, to obtain a horizontal coordinate T of the point on the 3D curve corresponding to the pixel point of the planar image

$$T = P \cdot L/d$$

wherein L represents a distance between an intersection point and a planar geometric center of the scanning area, the intersection point being a point where a line intersects a plane of the scanning area, the line connecting a focal point of the camera perpendicularly above the geometric center of the scanning platform and a point in the imaginary plane; wherein P represents a coordinate (x, y) of the 3D pixel in the planar image.

Points on the 3D curved surface and corresponding pixel points in the planar image are found according to the horizontal coordinate position. That is, a correlation is found. Pixel values of the points on the 3D curved surface are replaced by pixel values of corresponding pixel points in the planar image.

The image processing unit divides the 3D curved surface filled with pixel value into multiple 3D curves according to a bending direction of the page, arranges the pixel points on the 3D curve along a straight line to complete straightening one 3D curve, replaces the points on a straight line segment formed after straightening at one step by the pixel values of the points with equidistant chord length on the 3D curve, to complete straightening single 3D curve; repeats the above steps to straighten all the straight lines forming the 3D curved surface, and combines all the straight line segments to completely straighten the 3D curved surface. Finally, the scanning of current page is completed to obtain a flat scanning picture without bending.

In order to be able to transmit the final obtained scanning image to an external device, the system is also provided with a communication unit. As a preferred embodiment, the communication unit integrates a wireless communication module and a wired communication module, for example, the scanning picture is transmitted to the outside through a wifi module or a USB communication module.

As a preferred embodiment, a display unit is further arranged on an upper surface of the L-shaped support for displaying the initial planar image and the scanning image of the page obtained after the algorithm processing.

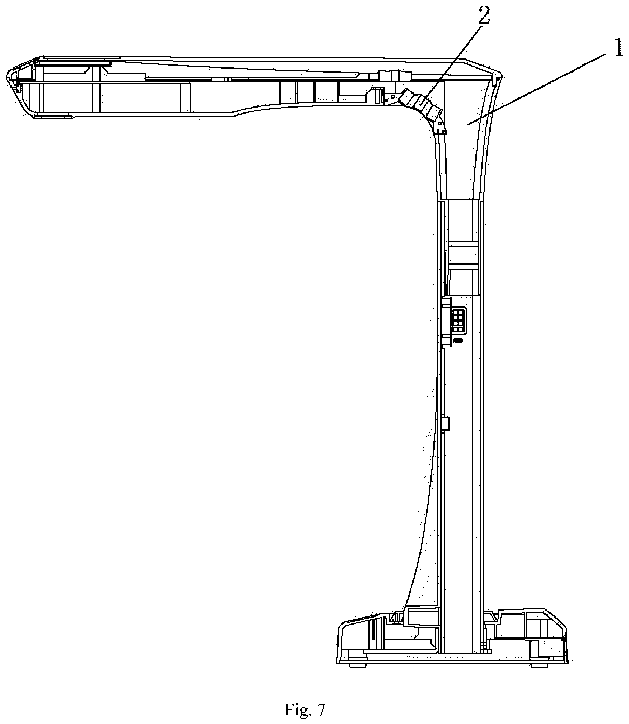

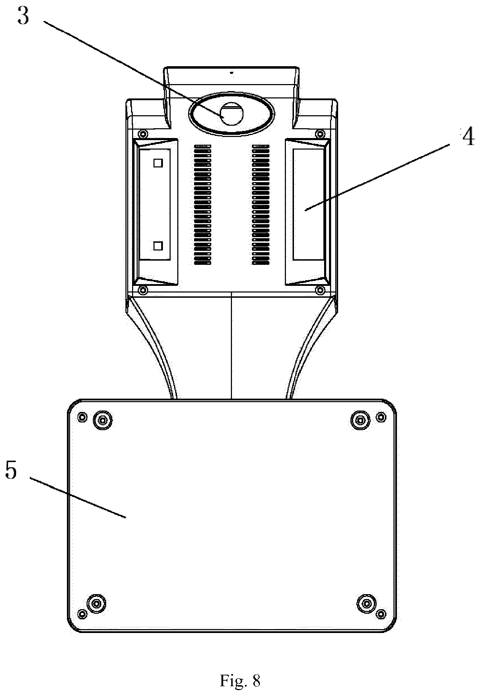

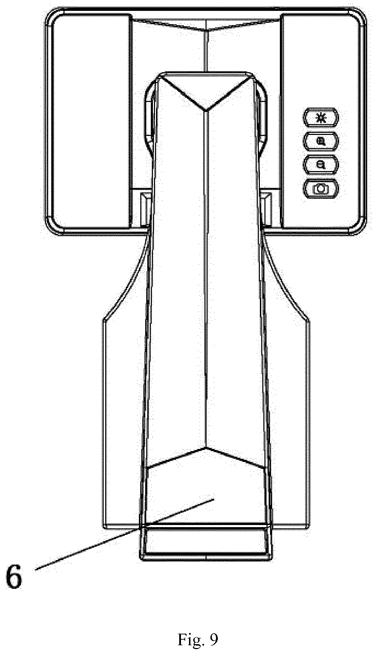

Embodiment 1, as shown in Figs. 7 to 9: the scanner mainly comprises an L-shaped support 1 and a counterweight base 5, and three laser emission components 2 are arranged at a corner of the L-shaped support 1. A front end of a transverse arm of the L-shaped support 1 is provided with a camera 3, and a light supplementation of LED is arranged behind the camera. In order to facilitate the real-time monitoring of the user, especially offline (which is not applicable to an external display) monitoring scanning process, an upper surface of the front end of the L-shaped support 1 is provided with a display 6, which facilitates monitoring current scanning state at any time. A surface of the counterweight base 5 is provided with an adjustment button.

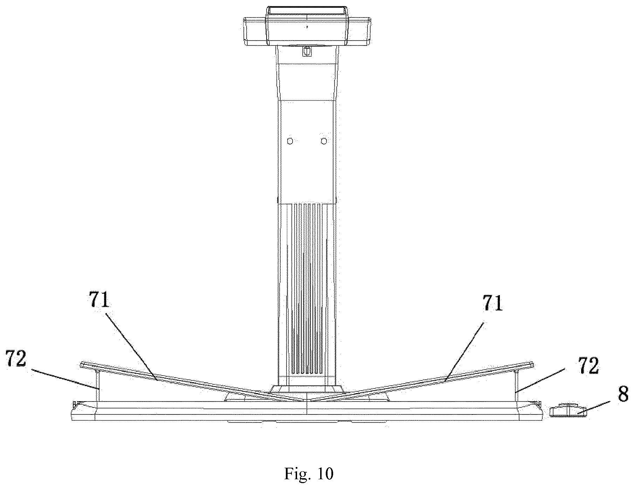

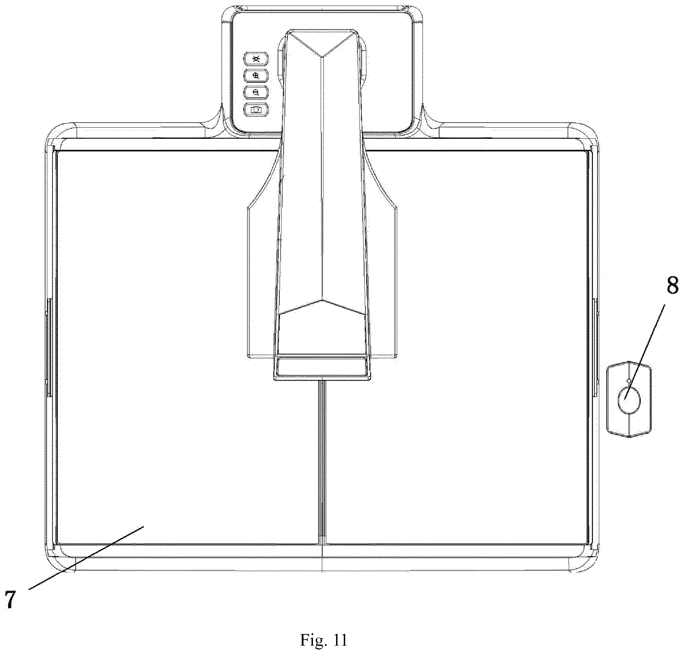

Embodiment 2, as shown in Figs. 10 to 11, similar to embodiment 1, and the distinction lies in having a marked scanning area 7. In embodiment 1, a size, an area and a position of the camera 3 or an imaginary scanning area set by the system are the same as that of the scanning area 7.

The scanning area 7 comprises two oppositely arranged support plates 71, the support plate has a adjustable elevation angle and can be moved left and right, so as to ensure that the book is able to be in an opened state under the effect of self-weight. Meanwhile, the left and right movement can ensure a middle line of the book (a separation line between two pages) is always located right below the focus of the camera 3, which facilitates obtaining planar images of two pages through the algorithm respectively.

A controller 8 is further provided, which can be connected to (communicated with) a system host by a wireless or wired connecting method, to facilitates controlling a photographing rhythm of the camera 3 by the user.

The forgoing are only preferred detailed embodiments of the present invention, but the invention is not limited to the disclosed exemplary embodiments, but by the scope of the following claims.

## Claims

1. An intelligent Internet high-definition scanner with laser correction, comprising:

   a scanning area (7) for placing a book to be scanned; a calibration laser emission unit (2) located above the scanning area (7), an image collection unit (3) and an image processing unit; wherein the calibration laser emission unit (2) emits a laser beam to the book unfolded and placed on the scanning area (7) during working, and forms a laser line on a surface of the opened page;

   the image collection unit (3) collects a planar image of a bent page with the laser line by establishing a three-dimensional coordinate system including a plane of the scanning area (7); according to coordinates of pixel points of the laser line and an intersection angle between the laser beam and the plane of the scanning area (7), height coordinates of each pixel point on the laser line in the planar image in the three-dimensional coordinate system is obtained through calculation of tangent function, a 3D curve of the laser line in the three-dimensional coordinate system is restored, and a real 3D curved surface of the page in the three-dimensional coordinate system is constructed according to the 3D curve; and

   a correlation between points on the 3D curved surface and the pixel points in the planar image is obtained through calculation, pixel values of the points on the 3D curved surface are replaced by pixel values of corresponding pixel points in the planar image, and the 3D curved surface with pixel values replacing is straightened, to complete scanning the current page,

   wherein a side of a bottom of the plane of the scanning area (7) is provided with a fixed mount (1) vertical to the plane, and a laser emission device of the calibration laser emission unit (2) and a camera (3) of the image collection unit (3) are respectively fixed in the fixed mount (1), and wherein the camera (3) is located right above the geometric center of the plane of the scanning area (7), and an imaginary rectangular pyramid is formed by connecting the camera (3) to angles of the plane of the scanning area (7).

2. The intelligent Internet high-definition scanner with laser correction according to claim 1, wherein a light supplementation unit (4) covering the scanning area (7) is further provided.

3. The intelligent Internet high-definition scanner with laser correction according to claim 1, wherein a calculation process of the height coordinates is as follows:

   the image processing unit analyzes the y coordinate of each pixel point on the laser line in the planar image, through calculation to obtain a distance difference value $d$ between a orthographic projection point of an intersection point of each pixel point on the laser line with the curved surface of the page on a scanning platform and an intersection line of the laser beam with the scanning platform; wherein $d=l1-y$, and $l1$ is a distance from the intersection line of the laser beam with the scanning platform to the orthographic projection of a beginning point of the laser beam on the scanning platform; and puts the difference value d and an intersection angle of the laser beam and the scanning platform into a equation (1);

   $$f(a, d) = \tan(a) * d \qquad (1)$$

   through calculation to obtain an actual space height $f(a, d)$ of each pixel point on the laser line in the planar image, which is a z coordinate of the pixel point.

4. The intelligent Internet high-definition scanner with laser correction according to claim 1, **characterized in that** the image processing unit is configured to,

   according to a height coordinate z of each point on the 3D curve, construct an imaginary plane for the point, the imaginary plane being parallel to a bottom surface of a rectangular pyramid, wherein the bottom surface is parallel to a plane containing the scanning area (7); calculate, with respect to each point on the 3D curve, an angle formed by intersection of the imaginary plane corresponding to the point and a line connecting said point and a focus of the camera (3); and based on the intersection angle, calculate a distance d between the point and a geometric center of the imaginary plane of the point according to the following equation, to obtain a horizontal coordinate T of the point on the 3D curve corresponding to the pixel point of the planar image

   $$T = P \cdot L/d$$

   wherein L represents a distance between an intersection point and a planar geometric center of the scanning area (7), the intersection point being a point where a line intersects a plane of the scanning area (7), the line connecting a focal point of the camera perpendicularly above the geometric center of the scanning platform and a point in the imaginary plane; wherein P represents a coordinate (x, y) of the 3D pixel in the planar image.

5. The intelligent Internet high-definition scanner with laser correction according to claim 1 or 4, wherein the image processing unit divides the 3D curved surface filled with pixel value into multiple 3D curves according to the bending direction of the page, arranges the pixel points on the 3D curve along a straight line to complete straightening one 3D curve, replaces the points on a straight line segment formed after straightening at one step by the pixel values of the points with equidistant chord length on the 3D curve, to complete straightening single 3D curve; repeats the above steps to straighten all the straight lines forming the 3D curved surface, and combines all the straight line segments to completely straighten the 3D curved surface.

6. The intelligent Internet high-definition scanner with laser correction according to claim 1, comprising a communication unit for transmitting a flat page image finally obtained through scanning or the planar image collected initially to an external device.

7. The intelligent Internet high-definition scanner with laser correction according to claim 1, comprising a display unit (6).

8. The intelligent Internet high-definition scanner with laser correction according to claim 1 or claim 7, comprising a storage unit and/or an external storage unit.

**Patentansprüche**

1. Intelligenter, hochauflösender Internet-Scanner mit Laserkorrektur, bestehend aus:

   einen Abtastbereich (7) zum Platzieren eines zu scannenden Buches; eine Kalibrierungslaser-Emissionseinheit (2), die sich über dem Abtastbereich (7) befindet, eine Bildsammlungseinheit (3) und eine Bildverarbeitungseinheit; wobei die Kalibrierungslaseremissionseinheit (2) während des Betriebs einen Laserstrahl auf das aufgeklappte und auf der Abtastfläche (7) platzierte Buch aussendet und eine Laserlinie auf einer Oberfläche der aufgeschlagenen Seite bildet; die Bilderfassungseinheit (3) ein ebenes Bild einer gebogenen Seite mit der Laserlinie erfasst, indem sie ein dreidimensionales Koordinatensystem einrichtet, das eine Ebene des Abtastbereichs (7) umfasst; gemäß den Koordinaten von Pixelpunkten der Laserlinie und einem Schnittwinkel zwischen dem Laserstrahl und der Ebene des Abtastbereichs (7) werden Höhenkoordinaten jedes Pixelpunkts auf der Laserlinie in dem ebenen Bild in dem dreidimensionalen Koordinatensystem durch Berechnung der Tangensfunktion erhalten, eine 3D-Kurve der Laserlinie in dem dreidimensionalen Koordinatensystem wird wiederhergestellt, und eine echte gekrümmte 3D-Oberfläche der Seite in dem dreidimensionalen Koordinatensystem wird gemäß der 3D-Kurve konstruiert; und

eine Korrelation zwischen Punkten auf der gekrümmten 3D-Oberfläche und den Pixelpunkten im ebenen Bild durch Berechnung erhalten wird, Pixelwerte der Punkte auf der gekrümmten 3D-Oberfläche durch Pixelwerte der entsprechenden Pixelpunkte im ebenen Bild ersetzt werden und die gekrümmte 3D-Oberfläche mit den ersetzten Pixelwerten begradigt wird, um das Scannen der aktuellen Seite abzuschließen, wobei eine Seite eines Bodens der Ebene des Abtastbereichs (7) mit einer festen Halterung (1) senkrecht zu der Ebene versehen ist, und eine Laseremissionsvorrichtung der Kalibrierungslaseremissionseinheit (2) und eine Kamera (3) der Bildsammlungseinheit (3) jeweils in der festen Halterung (1) befestigt sind, und wobei die Kamera (3) direkt über dem geometrischen Mittelpunkt der Ebene des Abtastbereichs (7) angeordnet ist und eine imaginäre rechteckige Pyramide durch Verbinden der Kamera (3) mit Winkeln der Ebene des Abtastbereichs (7) gebildet wird.

2. Intelligenter, hochauflösender Internet-Scanner mit Laserkorrektur nach Anspruch 1, wobei ferner eine Lichtergänzungseinheit (4) vorgesehen ist, die den Scanbereich (7) abdeckt.

3. Intelligenter, hochauflösender Internet-Scanner mit Laserkorrektur nach Anspruch 1, wobei ein Berechnungsprozess der Höhenkoordinaten wie folgt abläuft:

   die Bildverarbeitungseinheit die y-Koordinate jedes Pixelpunkts auf der Laserlinie in dem ebenen Bild analysiert, um durch Berechnung einen Abstandsdifferenzwert d zwischen einem orthographischen Projektionspunkt eines Schnittpunkts jedes Pixelpunkts auf der Laserlinie mit der gekrümmten Oberfläche der Seite auf einer Abtastplattform und einer Schnittlinie des Laserstrahls mit der Abtastplattform zu erhalten; wobei $d = l1 - y$, und $l1$ ein Abstand von der Schnittlinie des Laserstrahls mit der Abtastplattform zu der orthographischen Projektion eines Anfangspunktes des Laserstrahls auf der Abtastplattform ist; und den Differenzwert d und einen Schnittwinkel des Laserstrahls und der Abtastplattform in eine Gleichung (1) einsetzt:

$$f\,(a,\,d)=tan\,(a) * d\,(1)$$

um durch Berechnung eine tatsächliche Raumhöhe $f(a, d)$ jedes Pixelpunkts auf der Laserlinie im ebenen Bild zu erhalten, die eine z-Koordinate des Pixelpunkts ist.

4. Intelligenter, hochauflösender Internet-Scanner mit Laserkorrektur nach Anspruch 1, **dadurch gekennzeichnet, dass** die Bildverarbeitungseinheit so konfiguriert ist, dass sie

gemäß einer Höhenkoordinate z jedes Punktes auf der 3D-Kurve eine imaginäre Ebene für den Punkt konstruiert, wobei die imaginäre Ebene parallel zu einer Bodenfläche einer rechteckigen Pyramide ist, wobei die Bodenfläche parallel zu einer Ebene ist, die den Abtastbereich (7) enthält; in Bezug auf jeden Punkt auf der 3D-Kurve einen Winkel berechnen, der durch den Schnittpunkt der imaginären Ebene, die dem Punkt entspricht, und einer Linie gebildet wird, die den Punkt und einen Fokus der Kamera (3) verbindet; und
auf der Grundlage des Schnittwinkels einen Abstand d zwischen dem Punkt und einem geometrischen Mittelpunkt der imaginären Ebene des Punktes gemäß der folgenden Gleichung berechnen, um eine horizontale Koordinate T des Punktes auf der 3D-Kurve zu erhalten, die dem Pixelpunkt des planaren Bildes entspricht

$$T=P \cdot L/d$$

wobei L einen Abstand zwischen einem Schnittpunkt und einem planaren geometrischen Zentrum des Abtastbereichs (7) darstellt, wobei der Schnittpunkt ein Punkt ist, an dem eine Linie eine Ebene des Abtastbereichs (7) schneidet, wobei die Linie einen Brennpunkt der Kamera senkrecht über dem geometrischen Zentrum der Abtastplattform und einen Punkt in der imaginären Ebene verbindet; wobei P eine Koordinate (x, y) des 3D-Pixels in dem planaren Bild darstellt.

5. Intelligenter, hochauflösender Internet-Scanner mit Laserkorrektur nach Anspruch 1 oder 4, wobei die Bildverarbeitungseinheit die mit Pixelwerten gefüllte gekrümmte 3D-Oberfläche in mehrere 3D-Kurven entsprechend der Biegerichtung der Seite unterteilt, die Pixelpunkte auf der 3D-Kurve entlang einer geraden Linie anordnet, um die Begradigung einer 3D-Kurve abzuschließen, die Punkte auf einem geraden Liniensegment, das nach der Begradigung in einem Schritt gebildet wurde, durch die Pixelwerte der Punkte mit äquidistanter Sehnenlänge auf der 3D-Kurve ersetzt, um die Begradigung einer einzelnen 3D-Kurve abzuschließen; wiederholt die obigen Schritte, um alle geraden Linien zu begradigen, die die gekrümmte 3D-Oberfläche bilden, und kombiniert alle geraden Liniensegmente, um die gekrümmte 3D-Oberfläche vollständig zu begradigen.

6. Intelligenter, hochauflösender Internet-Scanner mit Laserkorrektur nach Anspruch 1, der eine Kommunikationseinheit zur Übertragung eines durch Scannen endgültig erhaltenen flachen Seitenbildes oder des anfänglich gesammelten ebenen Bildes an ein externes Gerät umfasst.

7. Intelligenter, hochauflösender Internet-Scanner mit Laserkorrektur nach Anspruch 1, umfassend eine Anzeigeeinheit (6).

8. Intelligenter, hochauflösender Internet-Scanner mit Laserkorrektur nach Anspruch 1 oder Anspruch 7, der eine Speichereinheit und/oder eine externe Speichereinheit umfasst.

## Revendications

1. Un scanner Internet intelligent à haute définition avec correction laser, comprenant :

une zone de balayage (7) pour placer un livre à balayer ; une unité d'émission laser de calibrage (2) située au-dessus de la zone de balayage (7), une unité de collecte d'images (3) et une unité de traitement d'images ;
dans lequel l'unité d'émission laser de calibrage (2) émet un faisceau laser vers le livre déplié et placé sur la zone de balayage (7) pendant le travail, et forme une ligne laser sur une surface de la page ouverte ;
l'unité de collecte d'images (3) collecte une image plane d'une page pliée avec la ligne laser en établissant un système de coordonnées tridimensionnelles comprenant un plan de la zone de balayage (7) ;
selon les coordonnées des points de pixel de la ligne laser et un angle d'intersection entre le faisceau laser et le plan de la zone de balayage (7), les coordonnées de hauteur de chaque point de pixel sur la ligne laser dans l'image plane dans le système de coordonnées tridimensionnelles sont obtenues par le calcul de la fonction tangente,
une courbe 3D de la ligne laser dans le système de coordonnées tridimensionnelles est restaurée, et une surface incurvée 3D réelle de la page dans le système de coordonnées tridimensionnelles est construite selon la courbe 3D ; et une corrélation entre les points de la surface courbe en 3D et les points de pixels de l'image plane est obtenue par calcul, les valeurs de pixels des points de la surface courbe en 3D sont remplacées par les valeurs de pixels des points de pixels correspondants de l'image plane, et la surface courbe en 3D avec remplacement des valeurs de pixels est redressée, pour terminer le balayage de la page en cours, dans lequel un côté d'un fond du plan de la zone de balayage (7) est pourvu d'un support fixe (1) vertical au plan, et un dispositif d'émission laser de l'unité d'émission laser de calibrage (2) et une caméra (3) de l'unité de collecte d'images (3) sont respectivement fixés dans le support fixe (1), et dans lequel la caméra (3) est située juste au-dessus du centre géométrique du plan de la zone de balayage (7), et une pyramide rectangulaire imaginaire est formée en reliant la caméra (3) à des angles du plan de la zone de balayage (7).

2. Scanner haute définition Internet intelligent avec correction laser selon la revendication 1, dans lequel une unité de supplémentation de lumière (4) couvrant la zone de balayage (7) est en outre prévue.

3. Scanner haute définition Internet intelligent avec correction laser selon la revendication 1, dans lequel un processus de calcul des coordonnées de hauteur est le suivant :

l'unité de traitement d'image analyse la coordonnée y de chaque point de pixel sur la ligne laser dans l'image plane, par calcul pour obtenir une valeur de différence de distance d entre un point de projection orthographique d'un point d'intersection de chaque point de pixel sur la ligne laser avec la surface courbe de la page sur une plate-forme de balayage et une ligne d'intersection du faisceau laser avec la plate-forme de balayage ; dans laquelle *d=l1-y,* et *l1* est une distance entre la ligne d'intersection du faisceau laser avec la plate-forme de balayage et la projection orthographique d'un point de départ du faisceau laser sur la plate-forme de balayage ; et met la valeur de différence d et un angle d'intersection du faisceau laser et de la plate-forme de balayage dans une équation (1) ;

$$f\,(a,\,d)=tan\,(a)\,*\,d\;(1)$$

par calcul pour obtenir une hauteur d'espace réelle *f(a, d)* de chaque point de pixel sur la ligne laser dans l'image planaire, qui est une coordonnée z du point de pixel.

4. Scanner haute définition Internet intelligent avec correction laser selon la revendication 1, **caractérisé en ce que** l'unité de traitement d'image est configurée pour, selon une coordonnée de hauteur z de chaque point sur la courbe 3D, construire un plan imaginaire pour le point, le plan imaginaire étant parallèle à une surface inférieure d'une pyramide rectangulaire, dans lequel la surface inférieure est parallèle à un plan contenant la zone de balayage (7) ; calculer, par rapport à chaque point sur la courbe 3D, un angle formé par l'intersection du plan imaginaire correspondant au point et une ligne reliant ledit point et un foyer de la caméra (3) ; et

sur la base de l'angle d'intersection, calculer une distance d entre le point et un centre géométrique du plan imaginaire du point selon l'équation suivante, pour obtenir une coordonnée horizontale T du point sur la courbe 3D correspondant au point de pixel de l'image plane

$$T=P-L/d$$

dans laquelle L représente une distance entre un point d'intersection et un centre géométrique plan de la zone de balayage (7), le point d'intersection étant un point où une ligne coupe un plan de la zone de balayage (7), la ligne reliant un point focal de la caméra perpendiculairement au-dessus du centre géométrique de la plate-forme de balayage et un point dans le plan imaginaire ; dans laquelle P représente une coordonnée (x, y) du pixel 3D dans l'image planaire.

5. Scanner haute définition Internet intelligent avec correction laser selon la revendication 1 ou 4, dans lequel l'unité de traitement d'image divise la surface incurvée en 3D remplie de valeur de pixel en de multiples courbes en 3D selon la direction de pliage de la page, arrange les points de pixel sur la courbe en 3D le long d'une ligne droite pour terminer le redressement d'une courbe en 3D, remplace les points sur un segment de ligne droite formé après le redressement à une étape par les valeurs de pixel des points avec une longueur de corde équidistante sur la courbe en 3D, pour terminer le redressement d'une seule courbe en 3D ; répète les étapes ci-dessus pour redresser toutes les lignes droites formant la surface courbe en 3D, et combine tous les segments de ligne droite pour redresser complètement la surface courbe en 3D.

6. Scanner haute définition Internet intelligent avec cor

rection laser selon la revendication 1, comprenant une unité de communication pour transmettre une image de page plate finalement obtenue par balayage ou l'image plane collectée initialement à un dispositif externe.

7. Scanner Internet intelligent à haute définition avec correction laser selon la revendication 1, comprenant une unité d'affichage (6).

8. Scanner intelligent Internet haute définition avec correction laser selon la revendication 1 ou la revendication 7, comprenant une unité de stockage et/ou une unité de stockage externe.

Fig. 1

Fig. 2

Fig. 3

Fig. 4

Fig. 5

Fig. 6

Fig. 7

3

4

5

Fig. 8

Fig. 9

Fig. 10

Fig. 11

**EP 3 468 163 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5760925 A
- US 8072650 B1

- US 2004245485 A1

**Non-patent literature cited in the description**

- **ZHENG ZHANG et al.** Restoration of curved document images through 3D shape modeling. *Proceedings of the 2004 IEEE Computer Society Conference of Computer Vision and Pattern Recognition IEE,* 27 June 2004, vol. 1, 10-15